(19)

Europäisches
Patentamt
European
Patent Office
Office européen
des brevets

(11) **EP 2 264 591 A1**

(12) **EUROPEAN PATENT APPLICATION**

(43) Date of publication:
**22.12.2010 Bulletin 2010/51**

(51) Int Cl.:
***G06F 9/302*** *(2006.01)*     ***G06F 9/315*** *(2006.01)*
***G06F 9/45*** *(2006.01)*

(21) Application number: **09368019.7**

(22) Date of filing: **15.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **ST-NXP Wireless France**
**38000 Grenoble (FR)**

(72) Inventor: **Coupe, David**
**06220 Vallauris (FR)**

(74) Representative: **Schuffenecker, Thierry**
**Cabinet Thierry Schuffenecker**
**120, Chemin de la Maure**
**06800 Cagnes sur Mer (FR)**

(54) **Process for emulating Single Instruction Multiple Data (SIMD) instructions on a generic Arithmetic and Logical Unit (ALU), and image processing circuit for doing the same**

(57)     A process for executing a single instruction on a set of n bytes in a conventional processor or Arithmetic and Logical Unit, comprising the steps of:
- storing (21) into a storage n bytes representative of attributes of n contiguous pixels;
- performing (22) a READ operation into said storage of the purpose of loading a first set of n bytes representative of contiguous pixels values;
- optionally performing (23) a second READ operation into said storage for the purpose of loading a second set of n bytes representative of contiguous pixels values;

- pre-formatting (24) said first and, optionnaly said second, set of bytes by means of a masking operator so as to correct the effect of a conventional operator (shift, addition, subtraction) being applied by said conventional process on said first and, optionally said second set of bytes;
- execute (25) one operation among a shift, an addition or a subtraction in order to parally apply one single instruction to all bytes composing said first or, optionally, second set of bytes;
- storing (26) the result into said storage.

Fig. 3

## Description

### Technical field

The invention relates to the field of digital processing of data by Arithmetic and Logical Unit, and more particularly to a process for simultaneously processing multiple data representative of an image or a multimedia file by a generic ALU unit.

### Background Art

The recent development of Mobile telecommunications shows a significant interest from the customer, and the general public, for introducing new capabilities (sound reproduction, image sensing and processing ....) in the mobile handphones, and more generally in any modern electronic portable device.

Regarding the particular case of imaging, the recent handphones are equipped with camera and imaging sensing apparatus and are fitted with image processing circuits for processing such images.

This clearly shows a drastic increase in the processing resources which are necessary for handling and properly processing a large volume of data. This is particularly the case when considering the significant increase of pixel resolution of image sensors incorporated in recent mobile telephones.

The conventional way for responding to such desire has been, so far, the development of new processing units, and particularly new processors operating at higher speed and likely to process a greater volume of data.

Despite the significant progress made regarding power consumption, highly effective new processor results in an increase of the consumption of power and, above all, an increase in the manufacturing costs...

An alternative way of providing additional capabilities is based on the re-use and re-arrangement of known processing units so as to increase their efficiency.

### Summary of the invention

It is an object of the present invention to provide a new process for simultaneously processing multiple data with a same generic Arithmetic and Logical Unit (ALU).

It is a further object of the present invention to provide a new process for efficiently processing images consisting in a huge volume of pixels by means of a conventional 32 bits processor.

It is still another object of the present invention to provide a low cost process for achieving high capability of image processing even with a low-cost generic processor.

These and other objects of the invention are achieved by means of a process for executing a single instructions on a set of n bytes operand in a conventional processor or Arithmetic and Logical Unit, **characterized in that** it performs the steps of:

- storing into a storage n bytes representative of attributes of n contiguous pixels;
- performing a READ operation into said storage of the purpose of loading a first set of n bytes representative of contiguous pixels values;
- optionally performing a second READ operation into said storage for the purpose of loading a second set of n bytes representative of contiguous pixels values;
- pre-formatting said first and, optionally said second, set of bytes by means of a masking operator so as to correct the effect of a conventional operator (shift, addition, subtraction) being applied by said conventional process on said first and, optionally said second set of bytes;
- executing at least one operation among a shift, an addition or a subtraction in order to parally apply one single instruction to all bytes composing said first or, optionally, second set of bytes;
- storing the result into said storage.

Thanks to such process, the processor can be effectively used as a Single Instruction Multiple Data configuration, what results in an significant increase ( possibly up to x4) of the speed of the process.

Conversely, any low cost processor may be used for processing a significant volume of data which is very advantageous in the view of the development of low costs products implementing processing capabilities, such as , for instance, mobile telephone providing video and image processing.

In one embodiment, n is equal to 4 and the storage is structured so as to store 32 bits data words, each comprising four bytes respectively assigned to four contiguous pixels.

In one embodiment, the pre-formatting is based on the use of the following pattern being ANDed:

| Byte A0 | Byte A1 | Byte A2 | Byte A3 |
|---------|---------|---------|---------|
| **0xFE** | **0xFE** | **0xFE** | **0xFE** |

Alternatively, the pre-formatting is based on the use of the following pattern being OR-Mask with the following pattern 0x80808080 for one set of bytes so as to achieve a subtraction.

In one embodiment, the process is applicable to RGB or YUV coding. More generally, the method can be used for any image/video representation which is coded on 8 bits.

In one embodiment, the process is executed in a RISC or ARM processor for the purpose of performing filtering operations including, interpolation (such as bilinear interpolation), averaging, image resizing, zooming, downscaling etc...

The invention also achieves an image processing circuit comprising a processor or Arithmetic and Logical Unit (ALU) for the purpose of simultaneously executing one instructions on a set of n bytes assigned to n contiguous pixels, further comprising:

- a storage for storing n bytes representative of attributes of n contiguous pixels;
- means for loading from said storage a first set of n bytes representative of contiguous pixels values;
- means for optionally loading from said storage a second set of n bytes representative of contiguous pixels values;
- means for pre-formatting said first and, optionally, said second set of bytes by means of a masking operator so as to correct the effect of a SHIFT-ADDITION-SUBTRACTOR operation applied by said processor or ALU;
- means for applying a single SHIFT-ADDITION or SUBTRACTION instruction to all bytes composing said first or, optionally, second set of bytes;
- means for storing the result into said storage.

In one embodiment, the storage stores 32 bits words and the ALU simultaneously execute one single instruction on four distinctive bytes assigned to four contiguous pixels.

In one embodiment, the pre-formatting is based on the use of the following pattern being ANDed:

| Byte A0 | Byte A1 | Byte A2 | Byte A3 |
|---------|---------|---------|---------|
| **0xFE** | **0xFE** | **0xFE** | **0xFE** |

Alternatively, when a subtraction has to be applied on one operand, the following following pattern is used with a OR operator as a mask: 0x80808080 for one set of bytes.

The invention is particularly useful for embodying a mobile telephone incorporating advanced and sophisticated image processing capabilities based on the use of a conventional RISC or ARM processor achieving filtering operations including, interpolation (such as bilinear interpolation), averaging, image resizing, zooming, downscaling etc...

The mobile telephone includes:

- a storage for storing n bytes representative of attributes of n contiguous pixels;
- means for loading from said storage a first set of n bytes representative of contiguous pixels values;
- means for optionally loading from said storage a second set of n bytes representative of contiguous pixels values;
- means for pre-formatting said first and, optionnaly, said second set of bytes by means of a masking operator so as to correct the effect of a SHIFT-ADDITION-SUBTRACTOR operation applied by said processor or ALU;
- means for applying a single SHIFT-ADDITION or SUBTRACTION instruction to all bytes composing said first or, optionally, second set of bytes;
- means for storing the result into said storage.

More particularly, n is equal to 4 and the following masking pattern is ANDed:

| Byte A0 | Byte A1 | Byte A2 | Byte A3 |
|---------|---------|---------|---------|
| **0xFE** | **0xFE** | **0xFE** | **0xFE** |

Alternatively, the pre-formatting is based on the use of the following pattern being OR-Mask with the following pattern 0x80808080 for one set of bytes so as to achieve a subtraction.

The invention is particularly suitable for the purpose of processing high volume of pixels generated by high resolution imaging sensors fitted in recent mobile telephones.

## Description of the drawings

Other features of one or more embodiments of the invention will best be understood by reference to the following detailed description when read in conjunction with the accompanying drawings.

Figure 1a shows the principle of one conventional ALU providing arithmetical and logical operations of two operands coded on 32 bits.

Figure 1b illustrates the principle of re-structuring the ALU processor so as to achieve four parallel processings performed on four couples of operands.

Figure 2 illustrates one embodiment of a process of the invention.

Figure 3 illustrates the application of the process in the case of a conventional divide-by-two operation.

Figure 4 illustrates the application of the process in the case of the computation of an approximation of the average of two series of operands.

Figure 5 illustrates the application of the process to a general bi-linear filtering operation.

Figures 6 and 7 illustrate two particular hardware implementations of the formatting units in a conventional general CPU architecture.

Figures 8, 9 and 10 illustrate the performance of the process of the invention for a conventional - low speed - CPU processor operating a at speed of 133 Mhz.

Figure 11 illustrates the mask to be used for a simple shift, or a shift followed by addition in the case of a standard processor.

Figure 12 illustrates the mask to be used for a shift followed by a subtraction in the case of a standard processor.

Figure 13 illustrates the mask to be used for a simple shift, or a shift followed by an addition in the case of an ARM processor.

Figure 14 illustrates the mask to be used for a shift followed by a subtraction in the case of an ARM processor.

## Description of the preferred embodiment

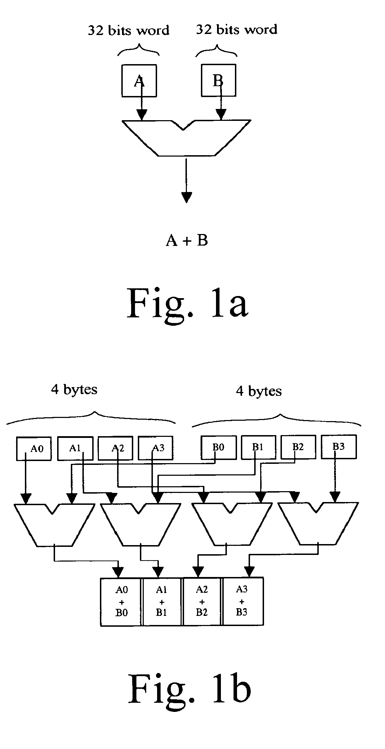

It will now be described a process for improving the operating of any conventional processor so as to modify its internal working and achieves an equivalent Single Instruction Multiple Data processing unit.
The invention can be particularly useful in the case of a Reduced Instructions Set Computer (RISC) processor or any equivalent Arithmetic or Logical Unit, and more particular to the architecture of an ARM processor which, as will be apparent hereinafter, allows easy adaptation of the process described hereinafter.
In the particular embodiment which is considered, the RISC or ARM processor is fitted for handling words coded with 32 bits, ie four bytes, such as illustrated in Figure 1 a. The processor is associated to appropriate storage for the purpose of storing words and such words are used, in one embodiment, for the purpose of simultaneously storing the digital representation of one color for a global set of four pixels. Clearly, the skilled man may adapt the teaching of the present invention for the processing of more than 4 pixels at the same time.
The embodiments described below can be implemented in digital electronic circuitry forming a mobile telephone of a Portable Digital Assistant (PDA) including hardware circuits with a combination of firmware and software.
While the use of 32 bits shows to be widely spread in the field of digital processing, it is clear that the more efficient processors of that category which operate at a high speed are particularly expensive to consider for the design of a new product.
On the other hand, known 32-bits processors operating at a modest speed (such as a 133 Mhz processor fitted with a 66Mhz memory bus) show to be low cost but fail to process huge volumes of data, and particularly pixel values which are required in today imaging processing techniques (5 Mega pixels and more )...
The invention deviates from the conventional use of the CPU or ALU unit for the purpose of simultaneously, and parallely, processing n bytes of data corresponding to n contiguous pixels values.

The conventional process is then capable of executing one single instruction on a set of n separate bytes, each being considered as being representative of one color attribute of one pixel.

As this will be apparent to a skilled man, the process is suitable for processing images for any type of structure and coding, be it YUV used for the television or the conventional RGB used for video cards and can be used for a wide range of filtering operations including, interpolation (such as bilinear interpolation), averaging, image resizing, zooming, downscaling etc...

With respect to figure 1b, there is now illustrated the principle of using the conventional 32 bits RISC processor - originally designed for the processing of two 32 bits operands A and B (See Figure 1a) - for the purpose of executing one instruction of four couples of bytes (A0, B0), (A1, B1), (A2, B2), (A3, B3), as shown in figure 1 b.

Clearly, in the embodiment being considered, operands A0, A1, A2 and A3 are representative of the color component ( R, G or B), of four contiguous pixels which are stored at a common address with a 32 bits memory.

Similarly, operands B0, B1, B2 and B3 are representative of the color component (R, G or B), of four contiguous pixels being stored at a common address with a 32 bits memory.

The invention is based on the use of one single instruction being applied to the whole 4-bytes word, advantageously combined with an appropriate preformatting as discussed below, so as to simultaneously achieve the same processing simultaneously on the four contiguous pixels.

Indeed, it can be proved that any filtering operation, such as interpolation, averaging, etc... can be reduced to some basic operations, based on an addition, subtraction, scalar multiplication and shifting operations applied on the operand.

Averaging is based on one addition, plus one shift operation:

$$Average(a,b) = \frac{a+b}{2}$$

Similarly, a bi-linear operation can also be decomposed as an addition, together with a shift operation

$$Bilinear\left(a,b,\frac{1}{4}\right) = \frac{1}{4} \times a + \frac{3}{4} \times b$$

Which can also be reduced to the following operation:

$$Bilinear\left(a,b,\frac{1}{4}\right) = \frac{1}{4} \times a + \frac{1}{2} \times b + \frac{1}{4} \times b$$

However if those basic operations are applied directly on the 32 bits operand - comprising bytes A0-A1-A2-A3 - and B0-B1-B2-B3 - the result shows to be incorrect because of the "trans-boarder" effects between two consecutive byte lanes..

In order to "compensate" such disturbance, the invention is based on the use of a pre-formatting operation of the two 32-bits operands so as to avoid any effect of disturbance of one byte (such as byte A2 for instance) on the neighboring byte A1.

The pre-formatting operation is applied in accordance with the particular operation being involved for the four pixels.

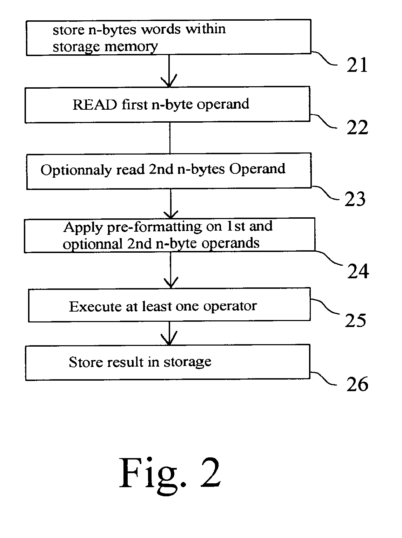

Figure 2 more particularly illustrates one embodiment of a process for using a conventional processor, such as a RISC processor, so as to embody a more powerful Single Instruction Multiple Data processor.

In a step 21, the process proceeds with the storage, into a 32-bit-storage being coupled to the processor, a set of n bytes representative of attributes of n contiguous pixels and assumed to be subject of a same instruction or a set of instructions. In one embodiment n is set to be equal to 4 and the storage is structured so as to store 32 bits data words, each comprising four bytes respectively assigned to four contiguous pixel values.

In a step 22, the process performs a READ operation of a first n-byte operand (comprising four bytes lanes A0-A1-A2-A3) being representative of pixel values of n contiguous pixels.

Step 23 is an optional step wherein a second n-bytes operand - namely BOB1-B2-B3 in the four-bytes embodiment being considered - is similarly read from the storage and has to be processed in the considered operation.

Indeed, step 23 can be disregarded in the case when the application of one single operation is considered for the four pixel values A0-A1-A2-A3.

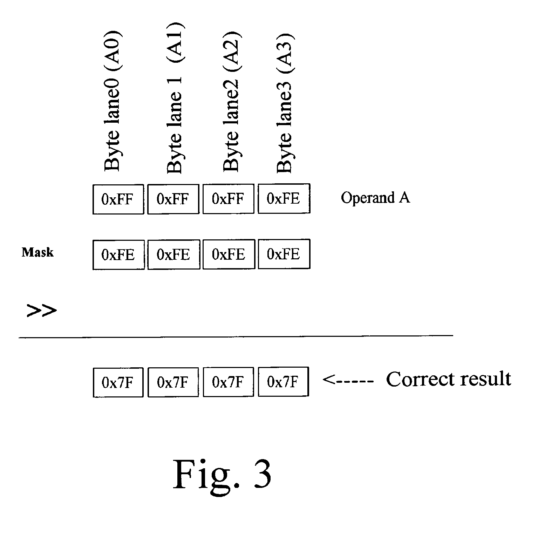

This is clearly the case of a divide-by-two operator which is only applied to one single 32 bits operand, that is to say to one single set of 4 bytes A0-A1-A2-A3 as illustrated in figure 3 discussed below. Again, it should be observed that the process can be generalized to the list of coefficients ½, ¼, 1/8, 1/16 , 1/32...

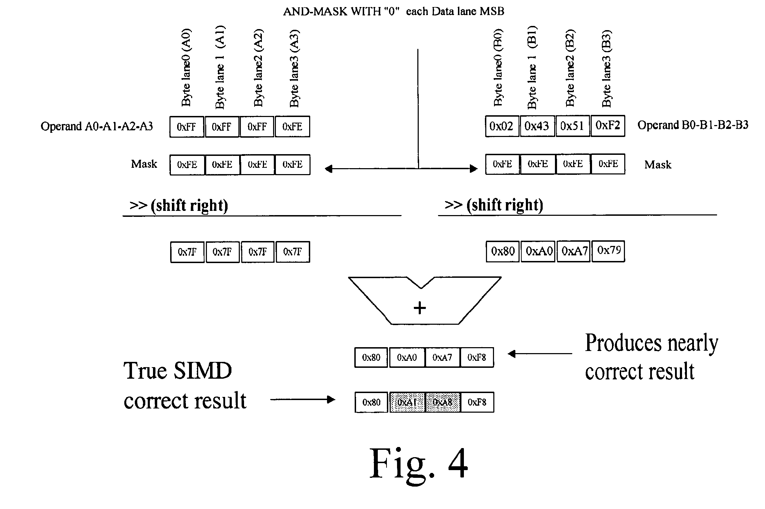

Alternatively, optional step 23 is to considered when an operation, as illustrated in figure 4, has to be applied on a series of two-operands, e.g. a first set of operand A0-A1-A2-A3 and a second set of operands B0-B1-B2-B3, such as, for instance, in the computing of an averaging between two sets of pixels in accordance with the general formulation:

$$Average(a,b) = \frac{a+b}{2}$$

Then, in a step 24, the process proceeds with a preformatting step applied on the first and - optionally - the second n-bytes operand so as to prevent any "disturbance" or "trans-border" effect between the different byte lanes (namely A0-A1-A2-A3 and, possibly B0-B1-B2-B3) structuring the 32 bits operands.

It has been discovered that the preformatting step can be based on a limited set of masking operations in accordance to the particular operator being considered.

For a **divide-by-two operator**, based on a shift operation applied to one n-byte - eg a 4-bytes - operand, the following masking pattern is being used and ANDed with the operand:

| Byte A0 | Byte A1 | Byte A2 | Byte A3 |
|---------|---------|---------|---------|
| 0xFE    | 0xFE    | 0xFE    | 0xFE    |

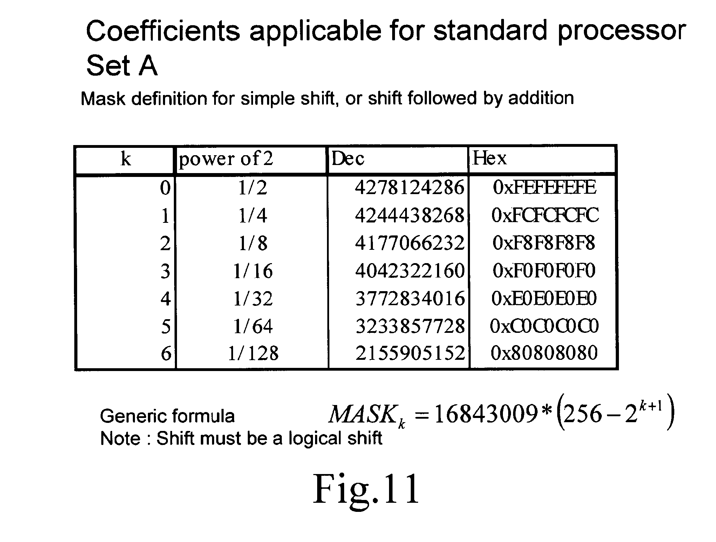

More generally, the method can be generalized for any division by 2, 4, 8, 16, 32 and 128 by means of the tables which are represented in figures 11-14

Then in step 25, the process applies a convention operator, such as a SHIFT, or ADDITION or SUBTRACTION before, in a step 26, storing back the n -bytes results within the storage.

Figure 3 illustrates the effect of such masking pre-formatting step being applied on the four byte lanes carrying the pixels values 0xFF, 0xFF, 0xFF and 0xFF. It can be seen that the application of the above mentioned masking pattern yields the correct value 0x7F 0x7F 0x7F and 0x7F.

It should be advantageously noticed that, in a ARM architecture (well known to a skilled man), the operations of steps 22-24 can be easily performed by means of one single instruction which is:

AND R1,R2, R3 LSR #1
R2 initialised to 0x7F7F7F7F, Operand A in R3

Figure 4 illustrates more particularly the application of the same masking pre-formatting for the purpose of computing the approximation of an average value of

$$Average(a,b) = \frac{a+b}{2}$$

It should be noticed that the process advantageously gets rid of the problem of the accuracy resulting from the fact that the computation of value A + B (each operand comprising the four byte lanes A0, A1, A2, A3 and B0, B1, B2 and B3 , respectively) normally produces one value which should be represented on 9 bits.

Indeed, most of the time in (video & graphic) filtering, a weighted sum is normalized back to the original data dynamic.

In one embodiment the average is based on one modified addition which is:

$$Modified\_average\ (a, b) =\ a/2\ + b/\ 2$$

Which remains within the frame of the 8 -bit structure of the byte lanes.

By doing so one looses accuracy since the data are first divided prior being summed. However, since the operands is being shifted first, one can then proceed with regular addition to produce result without carry ripple error

Although there is a slight loss of accuracy with the used of the modified average, one should notice such error remains clearly negligible or, at least, not noticeable by the human eye.

Indeed, one can show that the error can be quantified as follows:

Sum of operands is greater or equal to 19: relative error on sum result is lower or equal to 10%
Sum of operands is greater or equal to 37: relative error on sum result is lower or equal to 5%
Sum of operands is greater or equal to 39: relative error on sum result is lower or equal to 2%
Sum of operands is greater or equal to 133: relative error on sum result is lower or equal to 1%

Clearly, the smaller the value, the larger the error but which should nevertheless remain fully acceptable to one human eye. In other words, if two values are larger than 1/14th of full scale the error will always be contained in 5%

Figure 4 more particularly illustrates such modified averaging based on the same formatting than the one used in figure 3 can be used before the application of the ADDITION operator. For the sake of illustration the two following operands were considered:

$$A0\text{-}A1\text{-}A2\text{-}A4\ =\ 0xFF\ \ 0xFF\ \ 0xFF\ 0xFF$$

$$B0\text{-}B1\text{-}B2\text{-}B3 =\ \ 0x02\ \ 0x43\ \ 0x51\ and\ 0xF2$$

It can be seen that the advantageous combination of the pre-formatting step with mask pattern 0xFE 0xFE 0xFE 0xFE with the conventional ADDITION operator performed by the ALU yields a result which is:

$$0x80\ 0xA0\ 0xA7\ 0xF8$$

Which is nearly satisfactory approximation of the correct result (such as rendered by a "true" SIMD processor " which would be :

$$0x80\ \ 0xA1\ \ 0xA8\ 0xF8$$

It should be noticed that such approximation used in the digital processing provides negligible visual effect on one image or video files, and this shows the great benefit which can be obtained from the process of the invention.

It can be seen that the process discussed above and illustrated in figure 2 can be used for a wide number of applications, including the subtraction. In that case, it should be noticed that the process remains applicable with the use of an operand B (assumed to be subtracted) which is OR-Mask with the masking pattern : 0x80808080

It can be seen that the MSB bits are forced to "1" prior right shift normalization. Then a conventional subtraction performed in step 25 can be used for executing the four parallel subtraction executed on the four bytes.

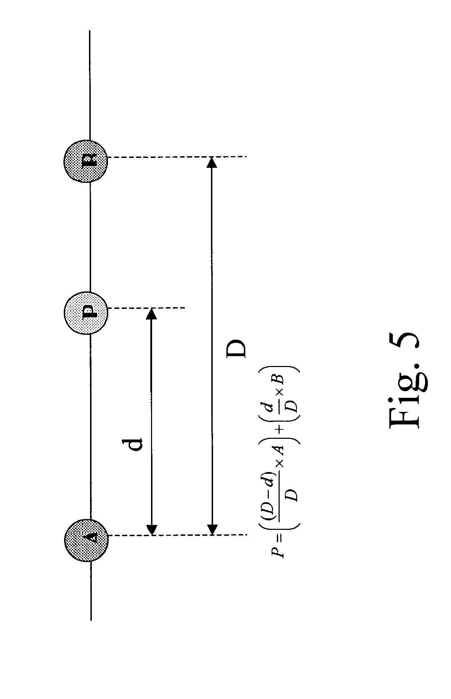

More generally, figure 5 shows that any bi-linear filtering process can take advantage of the invention since such filtering can be decomposed in SHIFT (one level or more , each corresponding to one divide by $2^k$ operation), ADDITION and SUBTRACTION. It should be reminded that any bilinear interpolation may be viewed as a weighted sum , where the sum of the two coefficients is equal to 1 and where each of the two coefficients can be individually viewed as a summation of factors being powers of 2... This results in the fact that only addition/substraction are required, combined with elementary shift operations.

In the case of a **<u>Scalar operation by a power of 2,</u>** the following ARM instructions can be considered:

1 shift operation per quadruple
0.25 instruction per pixel

It can be seen that such process yields a speed-up of 4x with respect to the conventional CPU speed.

In the case of an Addition & subtraction, the following ARM instructions may be considered :

1 AND/OR operation for operand, then 1 ADD/SUB
0.75 instruction per pixel

Which , again, yields a gain of speed by 4x.

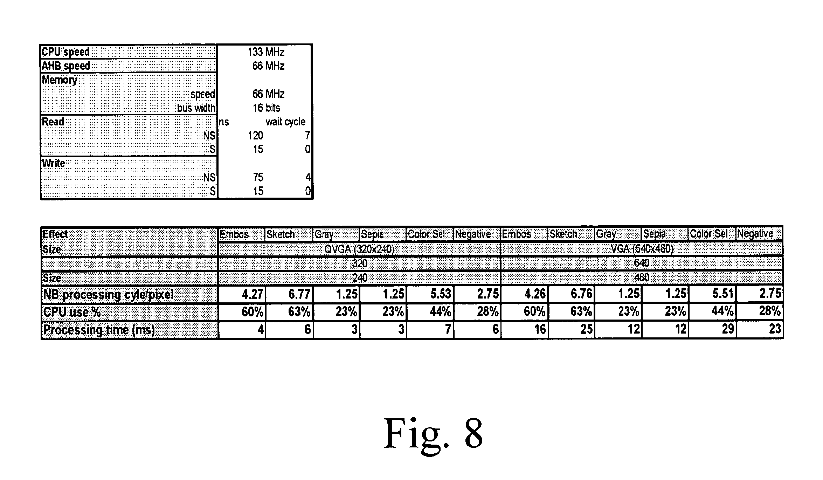

Figures 8 , 9 and 10 illustrates some figures of the gain which can be obtained by using the present invention in the case of a CPU configuration operating at 133 Mhz, with a memory operating at 66 Mhz. One may see that, even with such a "modest" configuration, the process achieves significant varieties of digital filtering on QVGA and even VGA images, including image effects like emboss, sketch, gray, sepia, color selection, negative, etc....

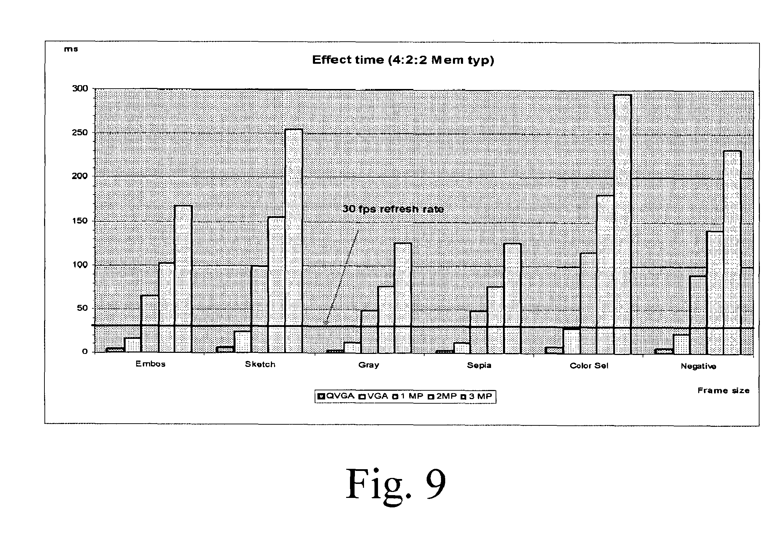

Figure 9 more particularly illustrates the effect time which is to be considered in different configurations of images ( QVGA, VGA, 1MegaPixel, 2 MegaPixel and 3MegaPixel) and different types of filtering. One may see that, even with such a modest CPU configuration, the CPU achieves processing at a refresh rate of 30 frame per seconde for quite a significant number of situations.

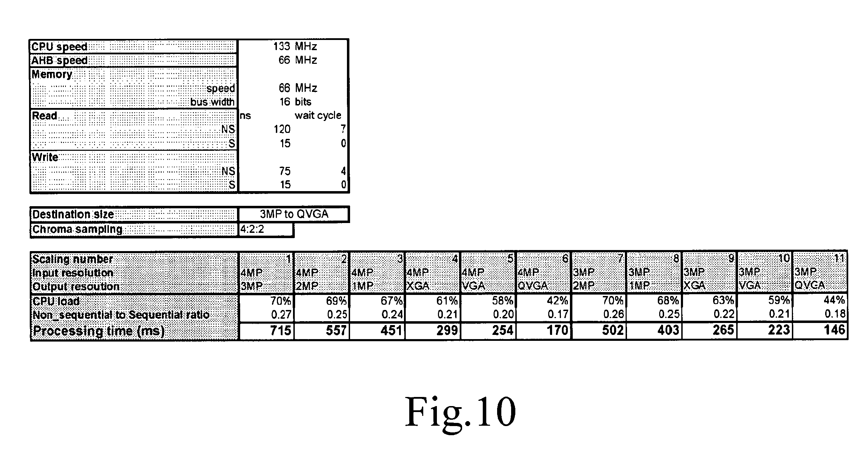

At last, figure 10 illustrates some figures of the processing time which can be obtained with the process described above.

It can therefore be seen that the invention achieves the realization of SIMD instruction execution on a standard RISC CPU which has not been planned to offer this functionality. This kind of instruction is particularly appropriate for the purpose of executing parallel processing like graphic and video content management.

The invention can be implemented in software, as described above, or by means of digital electronic circuitry based on computer hardware, firmware, software, or in combinations of them.

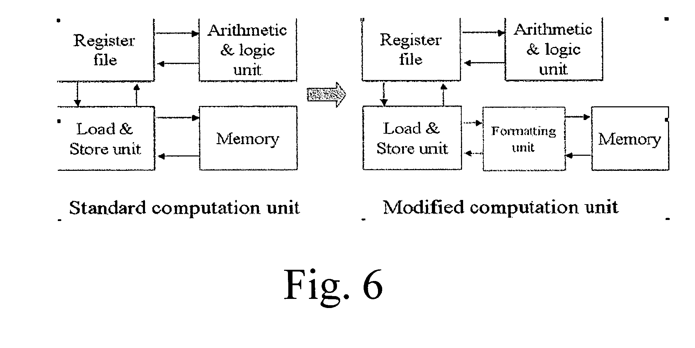

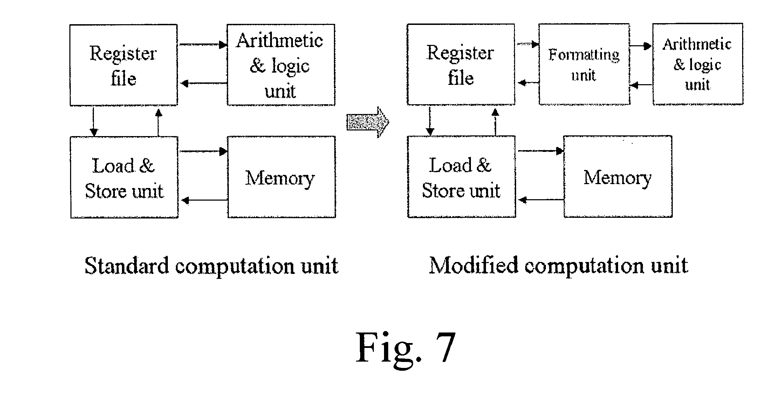

Figures 6 and 7 illustrates two possible hardware implementations of the pre-formatting unit in a CPU architecture comprising a Register File, an ALU, a Load & Store Unit and the memory storage.

In figure 6, it can be seen that the known implementation can be modified by introducing the pre-formatting unit directly between the LOAD and Store Unit and the memory whereas, in figure 7, the same pre-formatting Unit is arranged between the Register file and the ALU.

Clearly, the skilled man may consider any other types of arrangement for the purpose of modifying the working of the CPU.

Generally speaking, the pre-formating will be achieved by means of a software which can be implemented in a computer program product tangibly embodied in a machine-readable storage device for execution by a programmable processor; and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive and process data representative of images and pixels and instructions from, and to transmit data and instructions to, a data storage system. Each computer program can be implemented in a high-level procedural or object-oriented programming language, or in assembly or machine language if desired; and in any case, the language may be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs (application-specific integrated circuits).

Figures 11 - 14 illustrates a generalization of the method for different factors of division, respectively in the case of a conventional processor and also in the case of a ARM processor.

In the case of a conventional processor, the preformating being the following:

## Simple shift/shift+add case:

### Preformatting : Output = (Input AND MASK) >> shift

## Shift+sub case:

### Preformatting : Output = (Input OR MASK) >> shift

In the case of a ARM processor, it should be noticed that the latter has a shifter available on one operand along logical/arithmetic operation. The rewriting of the formula above leads to:

### Output = (Input >> shift) AND (Mask >> shift)

### Output = (Input >> shift) OR (Mask >> shift)

Which leads to the following generic formula: where :

### Output = (Input >> shift) LOGICAL_OPERATION Constant

It can be observe that one may merge both shift and masking operation by recalculating appropriate constant value

Referring back to Figure 11, the latter more particularly illustrates the mask to be used for a simple shift, or a shift followed by addition in the case of a standard processor. In that case, the generic formula is:

$$\text{Mask} = 16843009 * (256 - 2^{k+1})$$

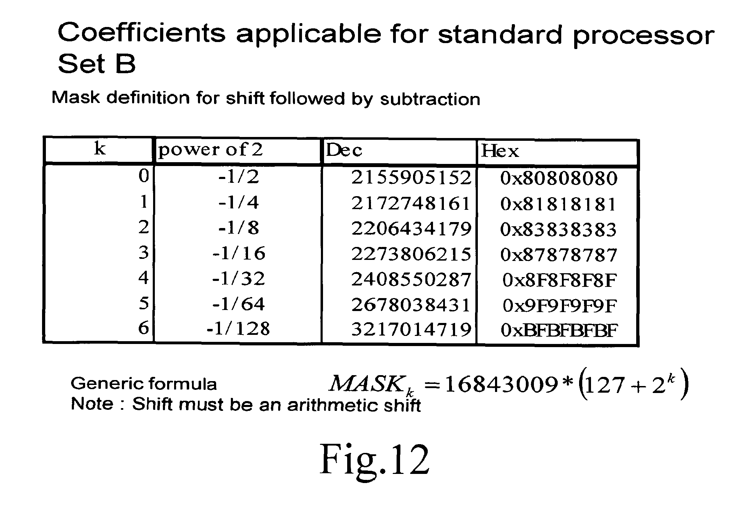

Figure 12 illustrates the mask to be used for a shift followed by a subtraction in the case of a standard processor. In that case, the generic formula is:

$$\text{Mask} = 16843009 * (127 + 2^{k})$$

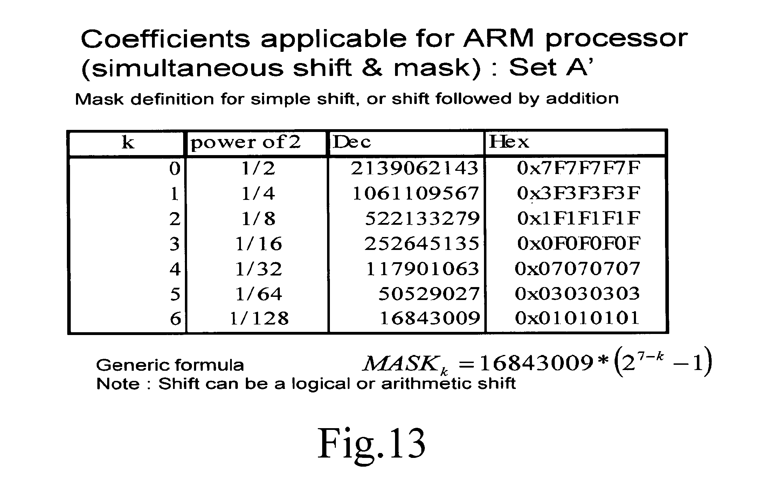

Figure 13 illustrates the mask to be used for a simple shift, or a shift followed by an addition in the case of an ARM processor. In that case, the generic formula is:

$$\text{Mask} = 16843009 * (2^{7-k} - 1)$$

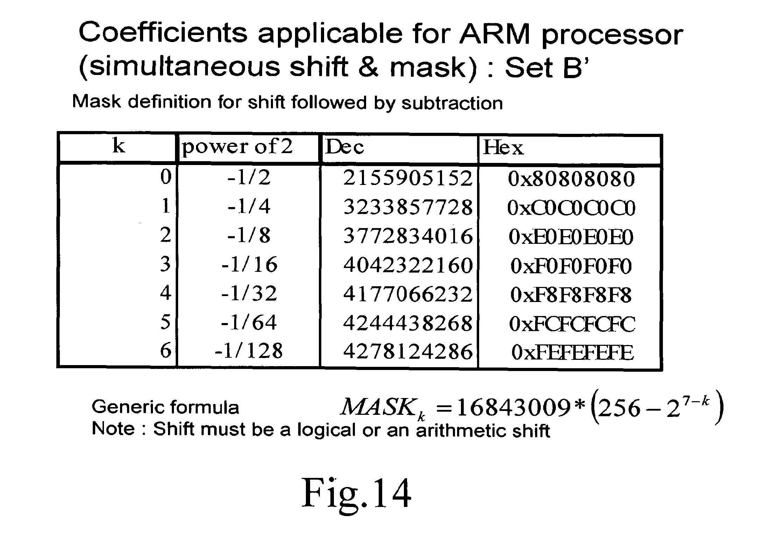

Figure 14 illustrates the mask to be used for a shift followed by a subtraction in the case of an ARM processor. In that case, the generic formula is:

$$Mask = 16843009 * (256 - 2^{7-k})$$

**Claims**

1. Process for executing a single instructions on a set of n bytes operand in a conventional processor or Arithmetic and Logical Unit, **characterized in that** it performs the steps of:

   - storing (21) into a storage n bytes representative of attributes of n contiguous pixels;
   - performing (22) a READ operation into said storage of the purpose of loading a first set of n bytes representative of contiguous pixels values;
   - optionally performing (23) a second READ operation into said storage for the purpose of loading a second set of n bytes representative of contiguous pixels values;
   - pre-formatting (24) said first and, optionnaly said second, set of bytes by means of a masking operator so as to correct the effect of a conventional operator (shift, addition, subtraction) being applied by said conventional process on said first and, optionally said second set of bytes;
   - execute (25) at least one operation among a shift, an addition or a subtraction in order to parallely apply one single instruction to all bytes composing said first or, optionally, second set of bytes;
   - storing (26) the result into said storage.

2. Process according to claim 1 **characterized in that** In one embodiment n is set to be equal to 4 and the storage is structured so as to store 32 bits data words, each comprising four bytes respectively assigned to four contiguous pixels.

3. Process according to claim 2 **characterized in that** said pre-formatting is based on the use of the following pattern being ANDed:

| Byte A0 | Byte A1 | Byte A2 | Byte A3 |
| --- | --- | --- | --- |
| **0xFE** | **0xFE** | **0xFE** | **0xFE** |

4. Process according to claim 2, **characterized in that** said pre-formatting is based on the use of the following pattern being OR-Mask with the following pattern 0x80808080 for one set of bytes.

5. Process according to anyone of claims 1 to 4 **characterized in that** said storage stores bytes representing RGB or YUV values.

6. Process according to anyone of claims 1 to 5 **characterized in that** said CPU or processor is a RISC processor or a ARM processor used for performing filtering operations including, interpolation (such as bilinear interpolation), averaging, image resizing, zooming, downscaling etc...

7. Image processing circuit comprising a processor or Arithmetic and Logical Unit (ALU) for the purpose of simultaneously executing one instructions on a set of n bytes assigned to n contiguous pixels, further comprising:

   - a storage for storing n bytes representative of attributes of n contiguous pixels;
   - means for loading from said storage a first set of n bytes representative of contiguous pixels values;
   - means for optionally loading from said storage a second set of n bytes representative of contiguous pixels values;
   - means for pre-formatting said first and, optionally, said second set of bytes by means of a masking operator so as to correct the effect of a SHIFT-ADDITION-SUBTRACTOR operation applied by said processor or ALU;
   - means for applying a single SHIFT-ADDITION or SUBTRACTION instruction to all bytes composing said first or, optionally, second set of bytes;

- means for storing the result into said storage.

8. Circuit according to claim 7 wherein n is equal to 4 and said storage stores 32 bits words, each word storing four bytes respectively assigned to four contiguous pixels.

9. Circuit according to claim 7 or 8 **characterized in that** said pre-formatting is based on the use of the following pattern being ANDed:

| Byte A0 | Byte A1 | Byte A2 | Byte A3 |
|---------|---------|---------|---------|
| **0xFE** | **0xFE** | **0xFE** | **0xFE** |

10. Circuit according to claim 7 or 8, **characterized in that** said pre-formatting is based on the use of the following pattern being OR-Mask with the following pattern 0x80808080 for one set of bytes.

11. Circuit according to anyone of claims 7 to 10 wherein said CPU or processor is a RISC processor or a ARM processor used for performing filtering operations including, interpolation (such as bilinear interpolation), averaging, image resizing, zooming, downscaling etc...

12. Mobile telephone comprising a processor or Arithmetic and Logical Unit (ALU) for the purpose of simultaneously executing one instructions on a set of n bytes assigned to n contiguous pixels, further comprising:

   - a storage for storing n bytes representative of attributes of n contiguous pixels;
   - means for loading from said storage a first set of n bytes representative of contiguous pixels values;
   - means for optionally loading from said storage a second set of n bytes representative of contiguous pixels values;
   - means for pre-formatting said first and, optionnaly, said second set of bytes by means of a masking operator so as to correct the effect of a SHIFT-ADDITION-SUBTRACTOR operation applied by said processor or ALU;
   - means for applying a single SHIFT-ADDITION or SUBTRACTION instruction to all bytes composing said first or, optionally, second set of bytes;
   - means for storing the result into said storage.

13. Mobile telephone according to claim 13 wherein n is equal to 4 and said storage stores 32 bits words, each word storing four bytes respectively assigned to four contiguous pixels.

14. Mobile telephone **characterized in that** said pre-formatting is based on the use of the following pattern being ANDed:

| Byte A0 | Byte A1 | Byte A2 | Byte A3 |
|---------|---------|---------|---------|
| **0xFE** | **0xFE** | **0xFE** | **0xFE** |

15. Computer program product tangibly embodied in a machine-readable storage device for execution by a programmable processor, for performing the process defined in anyone of claims 1 to 6.

32 bits word   32 bits word

A   B

A + B

# Fig. 1a

4 bytes    4 bytes

A0 A1 A2 A3  B0 B1 B2 B3

| A0 + B0 | A1 + B1 | A2 + B2 | A3 + B3 |
| --- | --- | --- | --- |

# Fig. 1b

store n-bytes words within
storage memory
21

READ first n-byte operand
22

Optionnaly read 2nd n-bytes Operand
23

Apply pre-formatting on 1st and
optionnal 2nd n-byte operands
24

Execute at least one operator
25

Store result in storage
26

# Fig. 2

Fig. 3

AND-MASK WITH "0" each Data lane MSB

| Byte lane0 (A0) | Byte lane 1 (A1) | Byte lane2 (A2) | Byte lane3 (A3) | | Byte lane0 (B0) | Byte lane 1 (B1) | Byte lane2 (B2) | Byte lane3 (B3) | |
|---|---|---|---|---|---|---|---|---|---|
| 0xFF | 0xFF | 0xFF | 0xFE | Operand A0-A1-A2-A3 ← | 0x02 | 0x43 | 0x51 | 0xF2 | Operand B0-B1-B2-B3 |

Operand A0-A1-A2-A3

| 0xFF | 0xFF | 0xFF | 0xFE |

Mask

| 0xFE | 0xFE | 0xFE | 0xFE |

Mask

| 0xFE | 0xFE | 0xFE | 0xFE |

Operand B0-B1-B2-B3

| 0x02 | 0x43 | 0x51 | 0xF2 |

**>> (shift right)**                    **>> (shift right)**

| 0x7F | 0x7F | 0x7F | 0x7F |

| 0x80 | 0xA0 | 0xA7 | 0x79 |

+

Produces nearly
correct result →

| 0x80 | 0xA0 | 0xA7 | 0xF8 |

True SIMD
correct result ⟶

| 0x80 | 0xA1 | 0xA8 | 0xF8 |

# Fig. 4

EP 2 264 591 A1

$$P = \left( \frac{(D-d)}{D} \times A \right) + \left( \frac{d}{D} \times B \right)$$

Fig. 5

Standard computation unit

Modified computation unit

# Fig. 6

EP 2 264 591 A1

| Register file | → | Arithmetic & logic unit |

| Load & Store unit | → | Memory |

Standard computation unit

| Register file | → | Formatting unit | → | Arithmetic & logic unit |

| Load & Store unit | → | Memory |

Modified computation unit

# Fig. 7

EP 2 264 591 A1

| CPU speed | 133 MHz | |
|---|---|---|
| AHB speed | 66 MHz | |
| Memory | | |
| speed | 66 MHz | |
| bus width | 16 bits | |
| Read | ns | wait cycle |
| NS | 120 | 7 |
| S | 15 | 0 |
| Write | | |
| NS | 75 | 4 |
| S | 15 | 0 |

| Effect | Embos | Sketch | Gray | Sepia | Color Sel | Negative | Embos | Sketch | Gray | Sepia | Color Sel | Negative |
|---|---|---|---|---|---|---|---|---|---|---|---|---|
| Size | QVGA (320x240) | | | | | | VGA (640x480) | | | | | |
| Size | 320 | | | | | | 640 | | | | | |
| Size | 240 | | | | | | 480 | | | | | |
| NB processing cyle/pixel | 4.27 | 6.77 | 1.25 | 1.25 | 5.53 | 2.75 | 4.26 | 6.76 | 1.25 | 1.25 | 5.51 | 2.75 |
| CPU use % | 60% | 63% | 23% | 23% | 44% | 28% | 60% | 63% | 23% | 23% | 44% | 28% |
| Processing time (ms) | 4 | 6 | 3 | 3 | 7 | 6 | 16 | 25 | 12 | 12 | 29 | 23 |

Fig. 8

Fig. 9

| CPU speed | 133 MHz | |
|---|---|---|
| AHB speed | 66 MHz | |
| Memory | | |
| speed | 66 MHz | |
| bus width | 16 bits | |
| Read | ns | wait cycle |
| NS | 120 | 7 |
| S | 15 | 0 |
| Write | | |
| NS | 75 | 4 |
| S | 15 | 0 |

| Destination size | 3MP to QVGA |
|---|---|
| Chroma sampling | 4:2:2 |

| Scaling number | 1 | 2 | 3 | 4 | 5 | 6 | 7 | 8 | 9 | 10 | 11 |
|---|---|---|---|---|---|---|---|---|---|---|---|
| Input resolution | 4MP | 4MP | 4MP | 4MP | 4MP | 4MP | 3MP | 3MP | 3MP | 3MP | 3MP |
| Output resolution | 3MP | 2MP | 1MP | XGA | VGA | QVGA | 2MP | 1MP | XGA | VGA | QVGA |
| CPU load | 70% | 69% | 67% | 61% | 58% | 42% | 70% | 68% | 63% | 59% | 44% |
| Non sequential to Sequential ratio | 0.27 | 0.25 | 0.24 | 0.21 | 0.20 | 0.17 | 0.26 | 0.25 | 0.22 | 0.21 | 0.18 |
| Processing time (ms) | 715 | 557 | 451 | 299 | 254 | 170 | 502 | 403 | 265 | 223 | 146 |

Fig.10

## Coefficients applicable for standard processor
## Set A

Mask definition for simple shift, or shift followed by addition

| k | power of 2 | Dec | Hex |
|---|---|---|---|
| 0 | 1/2 | 4278124286 | 0xFEFEFEFE |
| 1 | 1/4 | 4244438268 | 0xFCFCFCFC |
| 2 | 1/8 | 4177066232 | 0xF8F8F8F8 |
| 3 | 1/16 | 4042322160 | 0xF0F0F0F0 |
| 4 | 1/32 | 3772834016 | 0xE0E0E0E0 |
| 5 | 1/64 | 3233857728 | 0xC0C0C0C0 |
| 6 | 1/128 | 2155905152 | 0x80808080 |

Generic formula $MASK_k = 16843009 * (256 - 2^{k+1})$

Note : Shift must be a logical shift

## Fig.11

## Coefficients applicable for standard processor Set B

Mask definition for shift followed by subtraction

| k | power of 2 | Dec | Hex |
|---|---|---|---|
| 0 | -1/2 | 2155905152 | 0x80808080 |
| 1 | -1/4 | 2172748161 | 0x81818181 |
| 2 | -1/8 | 2206434179 | 0x83838383 |
| 3 | -1/16 | 2273806215 | 0x87878787 |
| 4 | -1/32 | 2408550287 | 0x8F8F8F8F |
| 5 | -1/64 | 2678038431 | 0x9F9F9F9F |
| 6 | -1/128 | 3217014719 | 0xBFBFBFBF |

Generic formula $$MASK_k = 16843009 * \left(127 + 2^k\right)$$

Note : Shift must be an arithmetic shift

## Fig.12

EP 2 264 591 A1

# Coefficients applicable for ARM processor (simultaneous shift & mask) : Set A'

Mask definition for simple shift, or shift followed by addition

| k | power of 2 | Dec | Hex |
|---|---|---|---|
| 0 | 1/2 | 2139062143 | 0x7F7F7F7F |
| 1 | 1/4 | 1061109567 | 0x3F3F3F3F |
| 2 | 1/8 | 522133279 | 0x1F1F1F1F |
| 3 | 1/16 | 252645135 | 0x0F0F0F0F |
| 4 | 1/32 | 117901063 | 0x07070707 |
| 5 | 1/64 | 50529027 | 0x03030303 |
| 6 | 1/128 | 16843009 | 0x01010101 |

Generic formula     $MASK_k = 16843009 * (2^{7-k} - 1)$

Note : Shift can be a logical or arithmetic shift

<div align="center">

# Fig.13

</div>

EP 2 264 591 A1

# Coefficients applicable for ARM processor (simultaneous shift & mask) : Set B'

Mask definition for shift followed by subtraction

| k | power of 2 | Dec | Hex |
|---|---|---|---|
| 0 | -1/2 | 2155905152 | 0x80808080 |
| 1 | -1/4 | 3233857728 | 0xC0C0C0C0 |
| 2 | -1/8 | 3772834016 | 0xE0E0E0E0 |
| 3 | -1/16 | 4042322160 | 0xF0F0F0F0 |
| 4 | -1/32 | 4177066232 | 0xF8F8F8F8 |
| 5 | -1/64 | 4244438268 | 0xFCFCFCFC |
| 6 | -1/128 | 4278124286 | 0xFEFEFEFE |

Generic formula $$MASK_k = 16843009 * \left(256 - 2^{7-k}\right)$$

Note : Shift must be a logical or an arithmetic shift

$$Fig.14$$

# EP 2 264 591 A1

Europäisches
Patentamt

European
Patent Office

Office européen
des brevets

## EUROPEAN SEARCH REPORT

Application Number

EP 09 36 8019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Emulate SIMD in software" INTERNET CITATION 16 February 2007 (2007-02-16), pages 1-5, XP007908957 Retrieved from the Internet: URL:http://www.eetasia.com/ARTP_8800453603_1034362.HTM> [retrieved on 2009-06-23] * the whole document * ----- | 1-15 | INV. G06F9/302 G06F9/315 G06F9/45 |
| X | STEFAN KRAEMER ET AL: "SoftSIMD - Exploiting Subword Parallelism Using Source Code Transformations" DESIGN, AUTOMATION&TEST IN EUROPE CONFERENCE&EXHIBITION, 2007. DATE '07, IEEE, PI, 1 April 2007 (2007-04-01), pages 1-6, XP031092302 ISBN: 978-3-9810801-2-4 * the whole document * ----- | 1,7,12, 15 | |

TECHNICAL FIELDS
SEARCHED       (IPC)

G06F

The present search report has been drawn up for all claims

| Place of search | Date of completion of the search | Examiner |
|---|---|---|
| Munich | 20 November 2009 | Kamps, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

26